# EUROPÄISCHE PATENTSCHRIFT

(11) **EP 1 996 802 B1**
(45) Veröffentlichungstag und Bekanntmachung des Hinweises auf die Patenterteilung: **15.07.2009**
(21) Anmeldenummer: 06841213.9
(22) Anmeldetag: 29.12.2006
(51) Int. Cl.: F01N 3/20, F01N 3/36, F01N 3/025

(54) **VERDAMPFUNGSVORRICHTUNG FÜR EINE KFZ-ABGASANLAGE, ABGASANLAGE FÜR EIN KRAFTFAHRZEUG SOWIE VERFAHREN ZUM HERSTELLEN EINER VERDAMPFUNGSVORRICHTUNG**
VAPOLIZATION DEVICE FOR A MOTOR VEHICLE EXHAUST SYSTEM, EXHAUST SYSTEM FOR A MOTOR VEHICLE, AND METHOD FOR PRODUCING A VAPOLIZATION DEVICE
DISPOSITIF DE VAPORISATION POUR UNE INSTALLATION DE GAZ D'ECHAPPEMENT DE VEHICULE AUTOMOBILE, INSTALLATION DE GAZ D'ECHAPPEMENT POUR UN VEHICULE AUTOMOBILE ET PROCEDE DE FABRICATION D'UN DISPOSITIF DE VAPORISATION

(30) Priorität: 14.03.2006 DE 102006011670
(43) Veröffentlichungstag der Anmeldung: 03.12.2008
(73) Patentinhaber: EMCON Technologies Germany (Augsburg) GmbH, 86154 Augsburg (DE)
(72) Erfinder: KLEMENT, Jürgen, 86663 Asbach-Bäumenheim (DE)
(74) Vertreter: Prinz & Partner
(86) Internationale Anmeldenummer: PCT/EP2006/012609
(87) Internationale Veröffentlichungsnummer: WO 2007/104353

(56) Entgegenhaltungen:
- EP-A- 1 369 557
- WO-A-02/064954
- WO-A-03/026777
- DE-A1- 19 625 447
- US-A- 4 576 617

## Beschreibung

Die Erfindung betrifft eine Verdampfungsvorrichtung für eine Kfz-Abgasanlage zum Verdampfen einer oxidierbaren Flüssigkeit und zum Einleiten eines aus der oxidierbaren Flüssigkeit erzeugten Dampfes in den Abgasstrom der Kfz-Abgasanlage, mit einem in einem Gehäuse angeordneten Heizelement in Form einer Glühwendel, wobei das Gehäuse einen Einlaß für die Flüssigkeit, wenigstens einen Verdampfungsraum und einen Auslaß für den Dampf aufweist, und wobei die Glühwendel in ein sie umgebendes Glührohr eingebettet ist. Weiterhin betrifft die Erfindung eine Abgasanlage für ein Kraftfahrzeug mit einer derartigen Verdampfungsvorrichtung sowie ein Verfahren zum Herstellen einer solchen Verdampfungsvorrichtung.

Zur Regeneration eines Partikelfilters oder NOₓ-Speicherkatalysators, die in modernen Abgasanlagen zunehmend eingesetzt werden, ist es bei einem Magergemischmotor von Zeit zu Zeit notwendig, das Abgas mit einer oxidierbaren Substanz anzureichern. Aus der EP 1 369 557 A1 ist hierzu eine Kraftstoffverdampfungseinheit bekannt, die stromaufwärts eines Partikelfilters mit vorgeschaltetem Oxidationskatalysator oder eines NOₓ-Speicherkatalysators angeordnet ist und zu bestimmten Zeiten dampfförmigen Kraftstoff in den Abgasstrom stromaufwärts des Partikelfilters bzw. NOₓ-Speicherkatalysators einleitet. Diese bekannte Verdampfungseinheit weist ein längliches Gehäuse auf, in das eine Glühstiftkerze eingeschraubt ist, deren Glühwendel als Heizelement zum Verdampfen des Kraftstoffs dient. Das die Glühwendel umgebende Glührohr der Glühstiftkerze ragt zu diesem Zweck in einen Verdampfungsraum für den Kraftstoff. Unvorteilhaft bei der bekannten Ausgestaltung ist, daß die Schraubverbindung zwischen der Glühstiftkerze und dem Gehäuse der Verdampfungseinheit eine potentielle Leckagestelle darstellt.

Demgegenüber schafft die Erfindung eine Verdampfungsvorrichtung der eingangs genannten Art, die sich durch eine gegenüber dem Stand der Technik verbesserte Dichtheit sowie geringe Herstellungskosten auszeichnet.

Erfindungsgemäß wird dies bei einer Vorrichtung der eingangs genannten Art dadurch erreicht, daß Glühwendel und Glührohr eine vorgefertigte Einheit bilden, die gehäuseseitig befestigt ist, indem das Glührohr selbst unmittelbar am Gehäuse der Verdampfungsvorrichtung angebracht ist. Gegenüber dem Stand der Technik wird also bei der erfindungsgemäßen Lösung auf das bei einer Glühstiftkerze für gewöhnlich vorgesehene, das Glührohr umgebende und das Einschraubgewinde tragende Gehäuse verzichtet. Statt dessen wird die Einheit aus Glühwendel und Glührohr direkt in das Gehäuse der Verdampfungsvorrichtung eingesetzt. Anders ausgedrückt ersetzt das Gehäuse der Verdampfungsvorrichtung das bei einer gewöhnlichen Glühstiftkerze übliche Glühstiftkerzengehäuse. Durch diese Ausgestaltung lassen sich Kosten einsparen, und es kann eine höhere Dichtigkeit als bei einer in das Vorrichtungsgehäuse eingeschraubten Glühstiftkerze erreicht werden.

Eine besonders hohe Dichtheit läßt sich z.B. dadurch erreichen, daß das Glührohr in das Gehäuse eingeformt, insbesondere eingepreßt oder eingegossen ist.

Gemäß einer bevorzugten Ausführungsform der Erfindung liegt zwischen einem ersten Abschnitt des Gehäuses und einem ersten Abschnitt des Glührohres eine Preßpassung vor. Alternativ oder zusätzlich wäre auch eine Klebeverbindung zwischen einem Abschnitt des Gehäuses und einem Abschnitt des Glührohres möglich.

Alternativ kann das Glührohr einstückig mit dem Gehäuse ausgebildet sein, wodurch ebenfalls eine besonders hohe Dichtheit erreicht wird. Bei dieser Ausgestaltung wird bevorzugt die Glühwendel in die vorgefertigte Einheit aus Glührohr und Gehäuse eingesetzt.

Vorzugsweise ist eine Flüssigkeitszuleitung vorgesehen, die mit dem einen zweiten Abschnitt des Glührohres umgebenden Verdampfungsraum in Verbindung steht. Ist eine Anfettung des Abgases erforderlich, wird über diese Flüssigkeitszuleitung eine bestimmte Flüssigkeitsmenge (beispielsweise aus einem im Fahrzeug vorgesehenen Flüssigkeitstank) in den Verdampfungsraum eingebracht und dort verdampft.

Vorteilhaft handelt es sich bei der oxidierbaren Flüssigkeit um Kraftstoff, wodurch auf eine zusätzliche, im Fahrzeug vorgesehene Flüssigkeitsversorgung verzichtet werden kann. Der Kraftstoff wird dann unmittelbar aus dem Tank bzw. einer im Fahrzeug ohnehin vorhandenen Kraftstoffleitung entnommen und dem Einlaß der Verdampfungsvorrichtung zugeführt.

Die vorgefertigte Einheit kann ferner einen Anschlußbolzen aufweisen, auf den das Glührohr aufgesetzt und an dem es befestigt ist, um das Innere des Glührohres zu schließen. Die vorgefertigte Einheit entspricht hierbei weitestgehend einer gewöhnlichen Glühstiftkerze, bei der jedoch auf das das Einschraubgewinde tragende Gehäuse verzichtet wurde.

Gemäß einer bevorzugten Ausgestaltung ist das Gehäuse ein langgestrecktes Rohr, aus dem der Anschlußbolzen herausragt, was den elektrischen Anschluß der Verdampfungsvorrichtung erleichtert.

Insbesondere kann die Glühwendel eine Regelwendel und zwei Heizwendel umfassen. Gegenüber einer gewöhnlichen Glühkerze mit nur einer Heizwendel läßt sich dadurch ein verbessertes Aufheizverhalten erzielen.

In einer weiteren Ausführungsform ist ein Stromzuleitungskabel vorgesehen, das direkt an die vorgefertigte Einheit angeformt ist. Das Stromzuleitungskabel kann z.B. durch Löten, Klemmen, Crimpen oder Schweißen an der vorgefertigten Einheit befestigt sein. Somit kann auf einen Schraubanschluß verzichtet werden.

Außerdem kann ein Massekabel vorgesehen sein, das fest am Gehäuse angebracht ist. Wiederum kann ein zusätzlicher Schraubanschluß entfallen.

Gemäß einem zweiten Aspekt der Erfindung ist eine Abgasanlage für ein Kraftfahrzeug vorgesehen, die eine Abgasleitung sowie wenigstens eine erfindungsgemäße Verdampfungsvorrichtung aufweist.

Das Gehäuse der Verdampfungsvorrichtung hat bevorzugt einen Abschnitt mit dem Auslaß, der in die Abgasleitung hineinragt. Über den Auslaß wird somit in einfacher Art und Weise der erzeugte Dampf in den Abgasstrom eingebracht.

Das Glührohr kann außerhalb des in die Abgasleitung hineinragenden Gehäuseabschnitts angeordnet sein, um es nicht oder lediglich in geringem Maße den im Betrieb des Fahrzeugs erheblich schwankenden Abgastemperaturen auszusetzen. Somit lassen sich die Umgebungsbedingungen, unter denen die Flüssigkeitsverdampfung stattfindet, besser kontrollieren und gleichmäßiger gestalten. Alternativ wäre es jedoch auch denkbar, das Glührohr zumindest teilweise in die Abgasleitung hineinragen zu lassen.

Wie bereits eingangs erwähnt, ist die Verdampfungsvorrichtung vorzugsweise stromaufwärts einer Abgasreinigungsvorrichtung, insbesondere eines Partikelfilters mit vorgeschaltetem Oxidationskatalysator oder eines NOₓ-Speicherkatalysators, angeordnet.

Das erfindungsgemäße Verfahren zum Herstellen einer Verdampfungsvorrichtung sieht folgende Schritte vor: Herstellen des Gehäuses und Befestigen einer vorgefertigten, separaten Einheit aus Glühwendel und Glührohr unmittelbar am Gehäuse. Dieses Herstellungsverfahren zeichnet sich somit durch seine Einfachheit und Kostengünstigkeit aus.

Vorzugsweise wird dabei das Glührohr in das Gehäuse eingepreßt. Dadurch wird eine deutlich höhere Dichtheit erreicht, als dies beim Einschrauben einer Glühstiftkerze in das Gehäuse möglich ist.

Ein alternatives Herstellungsverfahren zeichnet sich dadurch aus, daß das Gehäuse und das Glührohr als einstückige Einheit hergestellt werden und daß die Glühwendel anschließend in das Glührohr eingesetzt wird. Die so erhaltene Verdampfungsvorrichtung.weist ebenfalls eine besonders hohe Dichtigkeit auf.

Weitere Merkmale und Vorteile der Erfindung ergeben sich aus der nachfolgenden Beschreibung anhand der beigefügten Zeichnungen. In diesen zeigen:
- Figur 1 eine schematische Darstellung einer erfindungsgemäßen Abgasanlage;
- Figur 2 einen Längsschnitt durch eine Abgasleitung und eine Verdampfungsvorrichtung der Abgasanlage aus Figur 1;
- Figur 3 eine Ansicht einer Glühstiftkerze gemäß dem Stand der Technik, teilweise im Schnitt;
- Figur 4 eine Querschnittsansicht der Verdampfungsvorrichtung und der Abgasleitung aus Figur 2;
- Figur 5 eine perspektivische Ansicht der Verdampfungsvorrichtung und der Abgasleitung aus Figur 2;
- Figur 6 eine weitere perspektivische Ansicht der Verdampfungsvorrichtung und der Abgasleitung aus Figur 2; und
- Figur 7 einen Längsschnitt durch eine Abgasleitung und eine Verdampfungsvorrichtung gemäß einer zweiten Ausführungsform der Erfindung.

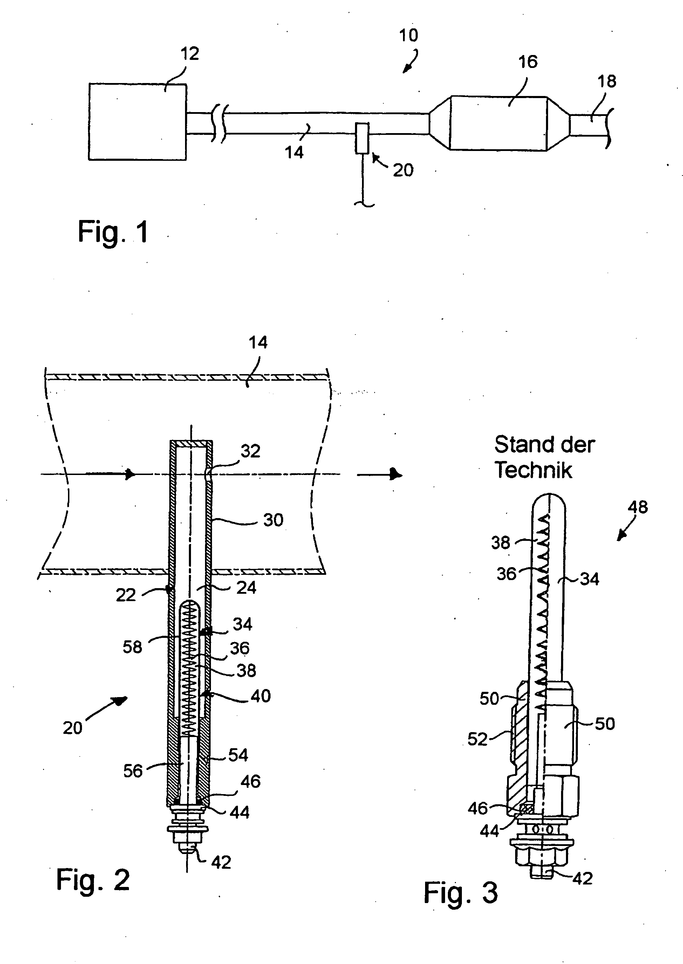

Figur 1 zeigt eine Abgasanlage 10, die einem Motor 12 eines Kraftfahrzeuges, bei dem es sich um einen Dieselmotor oder einen magerbetriebenen Benzinmotor handeln kann, nachgeschaltet ist. Die Abgasanlage 10 weist eine Abgasleitung mit einem ersten Rohrabschnitt 14 auf, der zu einem Abgasreinigungssystem 16 in Form eines Partikelfilters mit vorgeschaltetem Oxidationskatalysator oder eines NOₓ-Speicherkatalysators führt. Die Abgasreinigungsvorrichtung 16 ist über einen zweiten Rohrabschnitt 18 mit einem nicht gezeigten Endbereich der Abgasanlage 10 verbunden. Neben den in der Figur 1 schematisch angedeuteten weist die Abgasanlage 10 natürlich weitere Komponenten auf, etwa einen Krümmer, einen Abgasturbolader, eine Abgasrückführung und/oder weitere Katalysatoren, auf deren Darstellung in Figur 1 der Übersichtlichkeit halber verzichtet wurde.

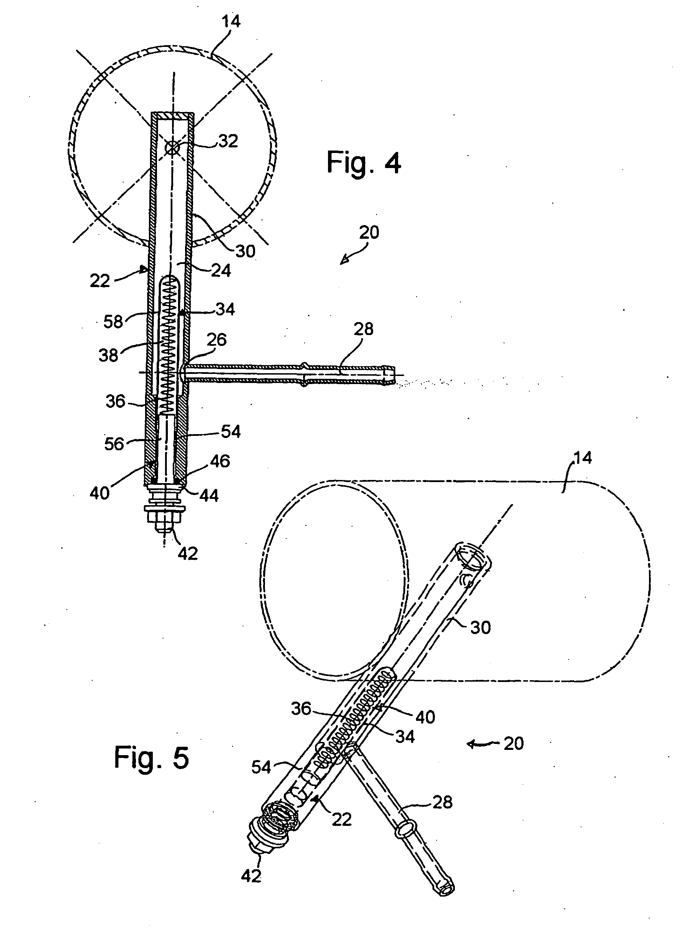

Stromaufwärts der Abgasreinigungsvorrichtung 16 ist eine Verdampfungsvorrichtung 20 angeordnet, die in den Figuren 2 sowie 4 bis 6 näher gezeigt ist. Die Verdampfungsvorrichtung 20 weist ein Gehäuse 22 in Form eines langgestreckten Rohres auf, in dem ein Verdampfungsraum 24 für eine oxidierbare Flüssigkeit, insbesondere Kraftstoff, ausgebildet ist. Der Verdampfungsraum 24 steht über einen Einlaß 26 mit einer Flüssigkeitszuleitung 28 in Verbindung (siehe Figur 4). Dabei sind der Einlaß 26 und die Flüssigkeitszuleitung 28 seitlich am rohrförmigen Gehäuse 22 in einem außerhalb der Abgasleitung liegenden Bereich angeordnet.

In einem in die Abgasleitung hineinragenden Abschnitt 30 des Gehäuses 22 ist ein Auslaß 32 vorgesehen, der mit Bezug auf den ersten Rohrabschnitt 14 der Abgasleitung in etwa mittig angeordnet ist und in Strömungsrichtung des Abgases (angedeutet durch die Pfeile in Figur 2) weist. Der Auslaß ist als einfache Öffnung im Gehäuse 22 ausgebildet.

Im Inneren des Gehäuses 22 ist ein Glührohr 34 angeordnet, in das eine Glühwendel 36 eingebettet ist. Zu diesem Zweck ist das Glührohr 34 mit einem Füll- oder Isolierpulver 38 gefüllt. Das Glührohr 34 und die Glühwendel 36 bilden eine vorgefertigte Einheit 40, die weiterhin auch das Isolierpulver 38, einen Anschlußbolzen 42, eine Isolierscheibe 44 sowie eine Dichtung 46 umfaßt. Der Anschlußbolzen 42 ist unter Zwischenschaltung der Dichtung 46 und der Isolierscheibe 44 in das Glührohr 34 eingesteckt, so daß das Glührohr 34 an ihm befestigt ist, um das Innere des Glührohres 34 zu verschließen. Die Einheit 40 weist somit nahezu sämtliche Bestandteile einer gewöhnliche Glühstiftkerze 48 auf (siehe Figur 3), wobei lediglich auf das bei der Glühstiftkerze 48 das Glührohr 34 umgebende Gehäuse 50, in das das Einschraubgewinde 52 eingeformt ist, verzichtet wird.

Bei der erfindungsgemäßen Verdampfungsvorrichtung 20 ist das Glührohr 34 selbst unmittelbar am Gehäuse 22 der Verdampfungsvorrichtung 20 angebracht, insbesondere in dieses eingeformt, wobei zwischen einem ersten Abschnitt 54 des Gehäuses 22 (in der Figur 2 unten) und einem ersten Abschnitt 56 des Glührohres eine Preßpassung vorliegt. Die vorgefertigte Einheit 40 ist derart in das Gehäuses 22 eingesetzt, daß zumindest der Anschlußbolzen 42 aus dem Gehäuse herausragt.

Ein zweiter, in der Figur 2 oberer Abschnitt 58 des Glührohres 34 erstreckt sich in den Verdampfungsraum 24 hinein. Die Länge des Gehäuses 22 ist bei der gezeigten Ausführungsform so gewählt, daß das Glührohr 34 vollständig außerhalb des in die Abgasleitung hineinragenden Gehäuseabschnitts 30 angeordnet ist.

Bei der Fertigung der Verdampfungsvorrichtung 20 wird zunächst das Gehäuse 22 hergestellt. Dann wird die vorgefertigte, separate Einheit 40 unmittelbar am Gehäuse 22 befestigt, indem das Glührohr 34 in das Gehäuse 22 eingepreßt wird. Zu diesem Zweck kann das Gehäuse 22 geringfügig aufgeweitet werden, beispielsweise durch Erwärmung.

Alternativ kann auch das Gehäuse 22 mit dem Glührohr 34 als einstückige Einheit hergestellt werden, wobei dann in einem weiteren Verfahrensschritt die Glühwendel 36 in das Glührohr 34 eingesetzt wird.

Zur Einleitung der Regeneration der Abgasreinigungsvorrichtung 16 wird dem Verdampfungsraum 24 der Verdampfungsvorrichtung 20 über die Flüssigkeitszuleitung 28 eine oxidierbare Flüssigkeit, insbesondere Kraftstoff, zugeführt, die mittels der als Heizelement dienenden Glühwendel 36 verdampft wird. Der erzeugte Dampf tritt über den Auslaß 32 in den Abgasstrom stromaufwärts der Abgasreinigungsvorrichtung 16 ein und sorgt so für eine Anfettung des Abgases.

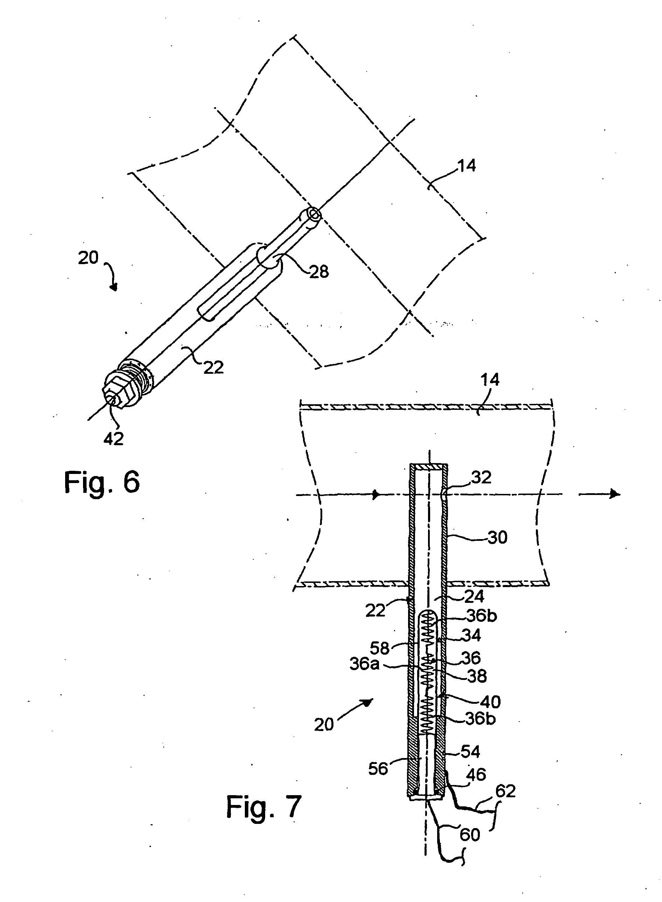

Figur 7 zeigt eine Verdampfungsvorrichtung 20 gemäß einer zweiten Ausführungsform der Erfindung. Dabei tragen gleiche oder funktionsgleiche Bauteile gleiche Bezugszeichen, und im folgenden wird nur auf die Unterschiede zur bisher beschriebenen Verdampfungsvorrichtung 20 eingegangen.

Bei der Verdampfungsvorrichtung 20 nach Figur 7 umfaßt die Glühwendel 36 wie üblich eine Regelwendel 36a, jedoch zwei Heizwendel 36b. Ein Stromzuleitungskabel 60 ist direkt an die vorgefertigte Einheit 40 angeformt, z.B. mit ihr verlötet. Weiterhin ist ein Massekabel 62 vorgesehen, das fest am Gehäuse 22 angebracht, z.B. mit diesem verlötet ist. Somit kann auf entsprechende Schraubanschlüsse verzichtet werden.

## Patentansprüche

1. Verdampfungsvorrichtung für eine Kfz-Abgasanlage (10) zum Verdampfen einer oxidierbaren Flüssigkeit und zum Einleiten eines aus der oxidierbaren Flüssigkeit erzeugten Dampfes in den Abgasstrom der Kfz-Abgasanlage (10), mit einem in einem Gehäuse (22) angeordneten Heizelement in Form einer Glühwendel (36), wobei das Gehäuse (22) einen Einlaß (26) für die Flüssigkeit, wenigstens einen Verdampfungsraum (24) und einen Auslaß (32) für den Dampf aufweist, und wobei die Glühwendel (36) in ein sie umgebendes Glührohr (34) eingebettet ist, **dadurch gekennzeichnet, daß** Glühwendel (36) und Glührohr (34) eine vorgefertigte Einheit (40) bilden, die gehäuseseitig befestigt ist, indem das Glührohr (34) selbst unmittelbar am Gehäuse (22) angebracht ist.

2. Verdampfungsvorrichtung nach Anspruch 1, **dadurch gekennzeichnet, daß** das Glührohr (34) in das Gehäuse (22) eingeformt ist.

3. Verdampfungsvorrichtung nach Anspruch 1 oder 2, **dadurch gekennzeichnet, daß** zwischen einem ersten Abschnitt (54) des Gehäuses (22) und einem ersten Abschnitt (56) des Glührohres (34) eine Preßpassung vorliegt.

4. Verdampfungsvorrichtung nach Anspruch 1 oder 2, **dadurch gekennzeichnet, daß** das Glührohr (34) einstückig mit dem Gehäuse (22) ausgebildet ist.

5. Verdampfungsvorrichtung nach einem der vorhergehenden Ansprüche, **dadurch gekennzeichnet, daß** eine Flüssigkeitszuleitung (28) vorgesehen ist, die mit dem einen zweiten Abschnitt (58) des Glührohres (34) umgebenden Verdampfungsraum (24) in Verbindung steht.

6. Verdampfungsvorrichtung nach einem der vorhergehenden Ansprüche, **dadurch gekennzeichnet, daß** es sich bei der oxidierbaren Flüssigkeit um Kraftstoff handelt.

7. Verdampfungsvorrichtung nach einem der vorhergehenden Ansprüche, **dadurch gekennzeichnet, daß** die vorgefertigte Einheit (40) ferner einen Anschlußbolzen (42) aufweist, auf den das Glührohr (34) aufgesetzt und an dem es befestigt ist, um das Innere des Glührohres (34) zu schließen.

8. Verdampfungsvorrichtung nach Anspruch 7, **dadurch gekennzeichnet, daß** das Gehäuse (22) ein langgestrecktes Rohr ist, aus dem der Anschlußbolzen (42) herausragt.

9. Verdampfungsvorrichtung nach einem der vorhergehenden Ansprüche, **dadurch gekennzeichnet, daß** die Glühwendel (36) eine Regelwendel (36a) und zwei Heizwendel (36b) umfaßt.

10. Verdampfungsvorrichtung nach einem der vorhergehenden Ansprüche, **dadurch gekennzeichnet, daß** ein Stromzuleitungskabel (60) vorgesehen ist, das direkt an die vorgefertigte Einheit (40) angebracht ist.

11. Verdampfungsvorrichtung nach einem der vorhergehenden Ansprüche, **dadurch gekennzeichnet, daß** ein Massekabel (62) vorgesehen ist, das fest am Gehäuse (22) angebracht ist.

12. Abgasanlage für ein Kraftfahrzeug, die eine Abgasleitung sowie wenigstens eine Verdampfungsvorrichtung (20) nach einem der vorhergehenden Ansprüche aufweist.

13. Abgasanlage nach Anspruch 12, **dadurch gekennzeichnet, daß** das Gehäuse (22) der Verdampfungsvorrichtung (20) einen Abschnitt (30) mit dem Auslaß (32) aufweist, der in die Abgasleitung hineinragt.

14. Abgasanlage nach Anspruch 13, **dadurch gekennzeichnet, daß** das Glührohr (34) außerhalb des in die Abgasleitung hineinragenden Gehäuseabschnitts (30) angeordnet ist.

15. Abgasanlage nach einem der Ansprüche 12 bis 14, **dadurch gekennzeichnet, daß** die Verdampfungsvorrichtung (20) stromaufwärts einer Abgasreinigungsvorrichtung (16), insbesondere eines Partikelfilters mit vorgeschaltetem Oxidationskatalysator oder eines NOx-Speicherkatalysators, angeordnet ist.

16. Verfahren zum Herstellen einer Verdampfungsvorrichtung (20) für eine Kfz-Abgasanlage (10) zum Verdampfen einer oxidierbaren Flüssigkeit und zum Einleiten eines aus der oxidierbaren Flüssigkeit erzeugten Dampfes in den Abgasstrom der Kfz-Abgasanlage (10), mit einem in einem Gehäuse (22) angeordneten Heizelement in Form einer Glühwendel (36), wobei das Gehäuse (22) einen Einlaß (26) für die Flüssigkeit, wenigstens einen Verdampfungsraum (24) und einen Auslaß (32) für den Dampf aufweist, **gekennzeichnet durch** folgende Schritte:
a) Herstellen des Gehäuses (22),
b) Befestigen einer vorgefertigten, separaten Einheit (40) aus Glühwendel (36) und Glührohr (34) unmittelbar am Gehäuse (22).

17. Verfahren nach Anspruch 16, **dadurch gekennzeichnet, daß** das Glührohr (34) in das Gehäuse (22) eingepreßt wird.

18. Verfahren zum Herstellen einer Verdampfungsvorrichtung (20) für eine Kfz-Abgasanlage (10) zum Verdampfen einer oxidierbaren Flüssigkeit und zum Einleiten eines aus der oxidierbaren Flüssigkeit erzeugten Dampfes in den Abgasstrom der Kfz-Abgasanlage (10), mit einem in einem Gehäuse (22) angeordneten Heizelement in Form einer Glühwendel (36), wobei das Gehäuse (22) einen Einlaß (26) für die Flüssigkeit, wenigstens einen Verdampfungsraum (24) und einen Auslaß (32) für den Dampf aufweist, **dadurch gekennzeichnet, daß** das Gehäuse (22) und das Glührohr (34) als einstückige Einheit hergestellt werden und daß die Glühwendel (36) anschließend in das Glührohr (34) eingesetzt wird.

## Claims

1. A vaporization device for a motor vehicle exhaust system (10) for vaporizing an oxidizable liquid and introducing a vapor produced from the oxidizable liquid into the exhaust gas flow of the motor vehicle exhaust system (10), the vaporization device including a heating element arranged in a housing (22) and having the form of a glowing filament (36), the housing (22) having an inlet (26) for the liquid, at least one vaporization chamber (24), and an outlet (32) for the vapor, and the glowing filament (36) being embedded in a glow tube (34) surrounding the glowing filament, **characterized in that** the glowing filament (36) and the glow tube (34) constitute a prefabricated unit (40) fastened on the side of the housing by the glow tube (34) itself being mounted directly to the housing (22).

2. The vaporization device according to claim 1, **characterized in that** the glow tube (34) is molded in the housing (22).

3. The vaporization device according to claim 1 or 2, **characterized in that** a press fit is present between a first portion (54) of the housing (22) and a first portion (56) of the glow tube (34).

4. The vaporization device according to claim 1 or 2, **characterized in that** the glow tube (34) is integrally formed with the housing (22).

5. The vaporization device according to any of the preceding claims, **characterized in that** a liquid supply pipe (28) is provided which is connected with the vaporization chamber (24) surrounding a second portion (58) of the glow tube (34).

6. The vaporization device according to any of the preceding claims, **characterized in that** the oxidizable liquid is a fuel.

7. The vaporization device according to any of the preceding claims, **characterized in that** the prefabricated unit (40) further includes a connecting pin (42), the glow tube (34) being placed on and fixed to the connecting pin to close the inside of the glow tube (34).

8. The vaporization device according to claim 7, **characterized in that** the housing (22) is an elongated tube from which the connecting pin (42) projects.

9. The vaporization device according to any of the preceding claims, **characterized in that** the glowing filament (36) comprises a control filament (36a) and two heating filaments (36b).

10. The vaporization device according to any of the preceding claims, **characterized in that** a power supply cable (60) is provided which is mounted directly to the prefabricated unit (40).

11. The vaporization device according to any of the preceding claims, **characterized in that** a ground cable (62) is provided which is firmly mounted to the housing (22).

12. An exhaust system for a motor vehicle, including an exhaust pipe and at least one vaporization device (20) according to any of the preceding claims.

13. The exhaust system according to claim 12, **characterized in that** the housing (22) of the vaporization device (20) comprises a portion (30) having the outlet (32) and projecting into the exhaust pipe.

14. The exhaust system according to claim 13, **characterized in that** the glow tube (34) is arranged outside of the housing portion (30) which projects into the exhaust pipe.

15. The exhaust system according to any of claims 12 to 14, **characterized in that** the vaporization device (20) is arranged upstream of an exhaust gas purification device (16), in particular of a particulate filter having an oxidation catalytic converter or a NOₓ-storage catalytic converter connected upstream thereof.

16. A method of producing a vaporization device (20) for a motor vehicle exhaust system (10) for vaporizing an oxidizable liquid and introducing a vapor produced from the oxidizable liquid into the exhaust gas flow of the motor vehicle exhaust system (10), the vaporization device including a heating element arranged in a housing (22) and having the form of a glowing filament (36), the housing (22) having an inlet (26) for the liquid, at least one vaporization chamber (24), and an outlet (32) for the vapor, **characterized by** the following steps:
a) manufacturing the housing (22),
b) fixing a prefabricated separate unit (40) comprised of the glowing filament (36) and a glow tube (34) directly to the housing (22).

17. The method according to claim 16, **characterized in that** the glow tube (34) is pressed into the housing (22).

18. A method of producing a vaporization device (20) for a motor vehicle exhaust system (10) for vaporizing an oxidizable liquid and introducing a vapor produced from the oxidizable liquid into the exhaust gas flow of the motor vehicle exhaust system (10), the vaporization device including a heating element arranged in a housing (22) and having the form of a glowing filament (36), the housing (22) having an inlet (26) for the liquid, at least one vaporization chamber (24), and an outlet (32) for the vapor, **characterized in that** the housing (22) and the glow tube (34) are produced as a one-piece unit and **in that** the glowing filament (36) is then inserted into the glow tube (34).

## Revendications

1. Dispositif de vaporisation pour une installation de gaz d'échappement (10) de véhicule automobile pour vaporiser un liquide oxydable et pour introduire une vapeur engendrée à partir du liquide oxydable dans le flux de gaz d'échappement de l'installation de gaz d'échappement (10) de véhicule automobile, comportant un élément de chauffage agencé dans un boîtier (22) et ayant la forme d'un filament spiralé (36), le boîtier (22) présentant une admission (26) pour le liquide, au moins une chambre de vaporisation (24) et une sortie (32) pour la vapeur, et le filament spiralé (36) étant noyé dans un tube incandescent (34) qui l'entoure, **caractérisé en ce que** le filament spiralé (36) et le tube incandescent (34) forment une unité préfabriquée (40) qui est fixée côté boîtier par le fait que le tube incandescent (34) est lui-même monté directement sur le boîtier (22).

2. Dispositif de vaporisation selon la revendication 1, **caractérisé en ce que** le tube incandescent (34) est conformé dans le boîtier (22).

3. Dispositif de vaporisation selon la revendication 1 ou 2, **caractérisé en ce qu'**un ajustage sans jeu se trouve entre un premier tronçon (54) du boîtier (22) et un premier tronçon (56) du tube incandescent (34).

4. Dispositif de vaporisation selon la revendication 1 ou 2, **caractérisé en ce que** le tube incandescent (34) est réalisé d'une seule pièce avec le boîtier (22).

5. Dispositif de vaporisation selon l'une des revendications précédentes, **caractérisé en ce qu'**il est prévu une conduite d'amenée de liquide (28) qui est en liaison avec la chambre de vaporisation (24) entourant un deuxième tronçon (58) du tube incandescent (34).

6. Dispositif de vaporisation selon l'une des revendications précédentes, **caractérisé en ce que** le liquide oxydable est du carburant.

7. Dispositif de vaporisation selon l'une des revendications précédentes, **caractérisé en ce que** l'unité préfabriquée (40) présente en outre un boulon de raccord (42) sur lequel est placé le tube incandescent (34) et sur lequel il est fixé pour fermer l'intérieur du tube incandescent (34).

8. Dispositif de vaporisation selon la revendication 7, **caractérisé en ce que** le boîtier (22) est un tube allongé hors duquel le boulon de raccord (42) fait saillie.

9. Dispositif de vaporisation selon l'une des revendications précédentes, **caractérisé en ce que** le filament spiralé (36) comprend une spirale de régulation (36a) et deux filaments chauffants (36b).

10. Dispositif de vaporisation selon l'une des revendications précédentes, **caractérisé en ce qu'**il est prévu un câble d'amenée de courant (60) qui est monté directement sur l'unité préfabriquée (40).

11. Dispositif de vaporisation selon l'une des revendications précédentes, **caractérisé en ce qu'**il est prévu un câble de masse (62) qui est monté de manière solidaire au boîtier (22).

12. Installation de gaz d'échappement pour un véhicule automobile qui présente une conduite de gaz d'échappement ainsi qu'au moins un dispositif de vaporisation (20) selon l'une des revendications précédentes.

13. Installation de gaz d'échappement selon la revendication 12, **caractérisée en ce que** le boîtier (22) du dispositif de vaporisation (20) présente un tronçon (30) avec la sortie (32), qui fait saillie dans la conduite de gaz d'échappement.

14. Installation de gaz d'échappement selon la revendication 13, **caractérisée en ce que** le tube incandescent (34) est agencé en dehors du tronçon de boîtier (30) faisant saillie dans la conduite de gaz d'échappement.

15. Installation de gaz d'échappement selon l'une des revendications 12 à 14, **caractérisé en ce que** le dispositif de vaporisation (20) est agencé en amont d'un dispositif d'épuration de gaz d'échappement (16), en particulier d'un filtre à particules avec catalyseur d'oxydation monté en amont, ou d'un catalyseur.

16. Procédé de fabrication d'un dispositif de vaporisation (20) pour une installation de gaz d'échappement (10) de véhicule automobile pour vaporiser un liquide oxydable et pour introduire une vapeur engendrée à partir du liquide oxydable dans le flux de gaz d'échappement de l'installation de gaz d'échappement (10) de véhicule automobile, comportant un élément de chauffage agencé dans un boîtier (22) et ayant la forme d'un filament spiralé (36), le boîtier (22) présentant une admission (26) pour le liquide, au moins une chambre de vaporisation (24) et une sortie (32) pour la vapeur, **caractérisé par** les étapes suivantes :
a) fabrication du boîtier (22),
b) fixation directement sur le boîtier (22), d'une unité (40) préfabriquée séparée, constituée par le filament spiralé (36) et le tube incandescent (34).

17. Procédé selon la revendication 16, **caractérisé en ce que** le tube incandescent (34) est pressé dans le boîtier (22).

18. Procédé de fabrication d'un dispositif de vaporisation (20) pour une installation de gaz d'échappement (10) de véhicule automobile pour vaporiser un liquide oxydable et pour introduire une vapeur engendrée à partir du liquide oxydable dans le flux de gaz d'échappement de l'installation de gaz d'échappement (10) de véhicule automobile, comportant un élément de chauffage agencé dans un boîtier (22) et ayant la forme d'un filament spiralé (36), le boîtier (22) présentant une admission (26) pour le liquide, au moins une chambre de vaporisation (24) et une sortie (32) pour la vapeur, **caractérisé en ce que** le boîtier (22) et le tube incandescent (34) sont réalisés sous forme d'unité d'une seule pièce et **en ce que** le filament spiralé (36) est ensuite inséré dans le tube incandescent (34).
